(19) Europäisches Patentamt
European Patent Office
Office européen des brevets

(11) **EP 1 335 941 B1**

(12) **EUROPEAN PATENT SPECIFICATION**

(45) Date of publication and mention
of the grant of the patent:
**21.12.2005 Bulletin 2005/51**

(51) Int Cl.⁷: **C08F 10/00**, C08F 4/64

(21) Application number: **01978505.4**

(86) International application number:
**PCT/FI2001/000926**

(22) Date of filing: **26.10.2001**

(87) International publication number:
**WO 2002/034802 (02.05.2002 Gazette 2002/18)**

(54) **PROCESS FOR PREPARING AND METHOD OF USING A DRAG REDUCING AGENT**

VERFAHREN ZUR HERSTELLUNG UND VERFAHREN ZUR VERWENDUNG EINES
STRÖMUNGSBESCHLEUNIGERS

PROCEDES DE PREPARATION ET D'UTILISATION D'UN AGENT REDUISANT LA RESISTANCE
AU FROTTEMENT

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **27.10.2000 FI 20002372**

(43) Date of publication of application:
**20.08.2003 Bulletin 2003/34**

(73) Proprietor: **M-I Finland Oy**
**06101 Porvoo (FI)**

(72) Inventors:
• **HARJUHAHTO, Hannu**
**FIN-06100 Porvoo (FI)**
• **VIRTANEN, Esa**
**FIN-06450 Porvoo (FI)**

• **KARBASI, Amir, Kiumars**
**FIN-02140 Espoo (FI)**
• **ROCKAS, Leif**
**FIN-06150 Porvoo (FI)**
• **LAIHO, Tapani**
**FIN-06150 Porvoo (FI)**
• **KARHU, Esa**
**FIN-06150 Porvoo (FI)**
• **EKLUND, Mirja**
**FIN-06650 Hamari (FI)**

(74) Representative: **Träskman, Berndt Hilding**
**Berggren Oy Ab,**
**P.O. Box 16**
**00101 Helsinki (FI)**

(56) References cited:
**EP-A1- 0 627 449        WO-A1-92/19653**
**US-A- 4 289 679        US-A- 4 358 572**

## Description

### Field of the invention

The invention relates to a process for the production of a drag reducing agent wherein a monomer or monomer mixture comprising one or more $C_4$-$C_{30}$ monoolefins is polymerized into an essentially non-crystalline, hydrocarbon-soluble, ultrahigh molecular weight drag reducing polymer in the presence of a polymerization catalyst system comprising a Group 4-6 (IUPAC 1990) transition metal compound and an organoaluminium compound. The invention also relates to a method for reducing the drag of hydrocarbon flowing by using said drag reducing agent.

### The prior art

When a fluid, such as a liquid hydrocarbon, is fed through a conduit, friction resulting from the fluid stream causes a pressure drop increasing with the distance from the point(s) of feeding. Such a friction loss, also called drag, causes very high fluid transportation costs.

In order to reduce drag, a variety of polymeric materials have been used as additives in the fluid to be transported. Suitable materials have been polymers (= homopolymers and copolymers) of olefins, in particular very high molecular weight, non-crystalline and hydrocarbon soluble polymers of $C_4$-$C_{30}$-$\alpha$-olefins.

In order to reduce drag effectively, a drag reducing olefin polymer must be of very high molecular weight, but at the same time soluble in and compatible with the fluid to be transported. These properties are only achieved with the right kind of catalysts. Ziegler-Natta catalysts have been modified to produce polymers having said properties. In the methods of Mack and Mack *et al*., see columns 11-18 of US 4,415,714, columns 7-10 of US 4,358,572 and column 4 of US 4,289,679, $\alpha$-olefins are polymerized in the presence of a Ziegler-Natta system comprising titanium chloride, an electron donor, and an alkyl aluminium cocatalyst and the polymerization is stopped at below about 20% conversion. Such polymers are soluble in hydrocarbon fluids and act as drag reducing agents.

EP 0627449 A1 and WO 9219653 A1 disclose the polymerization of olefins using a catalyst system comprising a Group 4-6 (IUPAC 1990) transition metal compound prepared by providing a support comprising an atomized complex of a magnesium halide and a monohydric $C_1$-$C_4$-alcohol and containing the support with a halogenous titanium compound and a $C_6$-$C_{18}$ alkyl carboxylic acid ester under conditions which deposit the halogenous titanium compound on the support and cause transesterification between the monohydric $C_1$-$C_4$-alcohol and the $C_6$-$C_{18}$ alkyl carboxylic acid ester.

However, none of these documents teach or suggest a method for obtaining an ultrahigh molecular weight polymer having all properties suitable for use as a drag reducing agent. Especially, the drag reducing agents of these documents tend to loose their effect when exposed to high shear forces caused e.g. by a centrifugal pump.

The purpose of the invention is to obtain a drag reducing agent, which in addition to reducing the fluid stream friction also retains that property when exposed to high shear forces.

### The invention

The purpose of the invention has now been fulfilled by means of a new process for the production of a drag reducing agent wherein a monomer mixture comprising one or more $C_4$-$C_{30}$ monoolefins, preferably $C_6$-$C_{20}$ monoolefins, is polymerized into an essentially non-crystalline, hydrocarbon-soluble, ultrahigh molecular weight drag reducing polymer in the presence of a polymerization catalyst system comprising a Group 4-6 (IUPAC 1990) transition metal compound and an organoaluminium compound, wherein said transition metal compound has been prepared by providing a support comprising an atomized complex of a magnesium halide and a monohydric $C_1$-$C_4$ alcohol and contacting the support with a halogenous titanium compound and a $C_6$-$C_{18}$ alkyl carboxylic acid ester under conditions which deposit the halogenous titanium compound on the support and cause transesterification between the monohydric $C_1$-$C_4$ alcohol and the $C_6$-$C_{18}$ alkyl carboxylic acid ester. In order to improve the high shear force resistance of the drag reducing agent, the monomer mixture contains 0.0001-10%, preferably 0.001-1%, most preferably 0.01-0.1%, based on of the weight of the $C_4$-$C_{30}$ monoolefin(s), preferably $C_6$-$C_{29}$ monoolefin(s), of a polyunsaturated aliphatic hydrocarbon, which is copolymerized with the said monoolefin(s).

### Detailed description of the invention

The support has preferably been prepared by contacting and heating magnesium chloride and ethanol to form a molten complex, preferably $MgCl_2 \cdot n\, C_2H_5OH$, wherein n is 2-6, and atomizing and solidifying the molten complex. The atomization can e.g. be accomplished by heating the components in a hot, inert liquid, whereby a dispersion of molten complex droplets is formed, after which the dispersion is poured into another cooled liquid for the precipitation of small complex particles. Preferably, however, $MgCl_2$ and $C_2H_5OH$ are melted and reacted together and the molten complex is sprayed into a cooled gas medium (spray-crystallizing), whereby small support particles are formed having sufficient alcohol on their surface to adhere the transition metal compound thereto and engage in transesterification with the carboxylic acid ester.

Next, the contacting between the support and the transitional metal compound takes place under conditions, which deposit the transitional metal compound on the support and cause transesterification between the monohydric $C_1$-$C_4$ alcohol and the $C_6$-$C_{18}$ alkyl carboxylic acid ester. This is preferably accomplished by preparing a hydrocarbon slurry of the support, adding titanium tetrachloride and a $C_6$-$C_{18}$ alkyl phthalate to the slurry, preferably at a temperature below + 120°C, and heating the resulting mixture to an elevated temperature, preferably over +120°C, at which transesterification takes place.

The organoaluminium component of the polymerization catalyst system may be any compound known in the field of Ziegler-Natta catalysis for acting as a so called cocatalyst. It preferably has the following composition:

$$R_mAl_nX_{3n-m}$$

wherein R is a $C_1$-$C_8$ alkyl, X is a halogen, m > 1 and n = 1 or 2. Most preferably, the organoaluminium compound is a tri-$C_1$-$C_2$-alkyl aluminium such as triethyl aluminium or triisobutyl aluminium.

According to one embodiment of the invention, a so called external donor may be used with the organoalumonium compound. A preferred external donor is a di-$C_1$-$C_{12}$ alkyl-di-$C_1$-$C_6$ alkoxy silane, e.g. cyclohexyl methyl dimethoxy silane.

The $C_4$-$C_{30}$ monoolefins used in the production process of the invention are typically higher monoolefins capable of undergoing polymerization by a Ziegler-Natta catalyst system. There are tens of such polymerizable $C_4$-$C_{30}$ monoolefins and their selection on the basis of the prior art is easy for a person skilled in the art. When selecting the monomers, they should be chosen on the basis of their capability to form high molecular weight non-crystalline and hydrocarbon soluble polymers.

Typical α-olefin monomers are hexene-1, octene-1, decene-1, dodecene-1, tetradecene-1, hexadecene-1 and eicosene-1. Preferably, the $C_4$-$C_{30}$ monoolefin(s) of the invention is(are) selected from $C_6$-$C_{12}$ alkene-1 compounds and their mixtures. Typical such α-olefin monomers and their combinations include propene-dodecene-1, butene-1-dodecene-1, butene-1-decene-1, hexene-1-dodecene-1, octene-1-tetradecene-1, butene-1-decene-1-dodecene-1, propene-hexene-1-dodecene-1, etc. Preferred monomers and monomer mixtures are hexene-1, octent-1, decene-1, dodecene-1, propene-dodecene-1, butene-1-decene-1, butene-1-dodeeene-1 and hexene-1-dodecene-1. Especially preferred monomers are hexene-1 and octene-1.

Preferably, the monomer or monomer mixture is polymerized into an essentially non-crystalline, hydrocarbon-soluble, ultrahigh molecular weight drag reducing polymer by carrying out the polymerization essentially in the absence of chain transfer agents, such as hydrogen, and/or stopping the reaction at a low conversion such as 10-30 mol-%, preferably 10-20 mol-%. The reaction can suitably be stopped by adding a substance, e.g. acetone, which deactivates the catalyst system, By using such a measure, ultra high molecular weight (UHMW, Mw > $_{light\ scattering}$ 106 g/mol) non-crystalline $C_4$-$C_{30}$ α-olefin polymers are produced.

Thanks to the polyunsaturation of the comonomer, some crosslinking takes place, which improves the high shear force resistance of the drag reducing agent. Thanks to the aliphatic character of the comonomer, the solubility of the drag reducing agent in the fluid to be transported is very high. A polymer is best dissolved by solvents having the same chemical structure as the polymer. Equally high solubilities are not to be expected of the drag reducing agents of Gessell *et al.* (US 5,276,116), which uses the non-aliphatic divinyl benzene or divinyl siloxane as polyunsaturated comonomers. Besides, Gessell *et al.* uses another catalyst system than the invention.

The polyunsaturated aliphatic hydrocarbon comonomer used to prepare the drag reducing agent of the invention may be any compound which copolymerizes and crosslinks either during or after the copolymerization. The art of olefin polymerization knows a large number of such polyunsaturated hydrocarbons which easily can be selected for the invention. Terpenes (isoprene oligomers and polymers) and related compounds such as dicyclopentadiene and 2-ethylidenenorborn-2-ene can be selected. According to a preferred embodiment of the invention, the polyunsaturated hydrocarbon is selected among linear $C_4$-$C_{30}$ dienes, preferably linear non-conjugated $C_6$-$C_{20}$ dienes. Typical such dienes are hexa-1,4-diene, octa-1,4-diene, octa-1,6-diene, octa-1,7-diene, and deca- 1,9-diene.

In addition to one polyunsaturated aliphatic hydrocarbon comonomer, mixtures of two and more of such comonomers may also be used.

The copolymerization of the $C_4$-$C_{30}$ monoolefin(s) and the polyunsaturated aliphatic hydrocarbons can be carried out at any convenient reaction conditions. As the drag reducing effect is better if the molecular weight of the copolymer is high, the copolymerization, just like the polymerization mentioned above, is preferably carried out at conditions which give high molecular weights. In the art of olefin homo- and copolymerization, the means for obtaining high molecular weight are generally known. Such means are, e.g., the elimination of all chain transfer agents, such as hydrogen, and impurities acting as chain transfer agents, see above.

More preferably, the copolymerization is carried out under conditions which produce ultrahigh molecular weight (Mw > $10^6$ g/mol) polymer, most preferably by carrying out the copolymerization rapidly to a monomer conversion of only 10-30 mol-%, advantageously 10-20 mol-%. See above. Then, the copolymerization is preferably finished by adding a substance such as acetone, which deactivates the catalyst system. If an ultrahigh molecular weight copolymer of an olefin and a polyunsaturated aliphatic hydrocarbon is produced in this manner, a superior combination of drag reduction, solubility and high shear force resistance is achieved.

Further, it is preferable, if the homo- or copolymerization of the invention to a ultrahigh molecular weight polymer is carried out in a hydrocarbon solvent. The homo- or copolymerization can e.g. be carried out at a starting temperature of between -30°C and +20°C, preferably about -10°C to -5°C and a final temperature of between -5°C and +30°C, preferably about +10°C to +1.5°C. Then, the pressure is preferably 1-20 bar, most preferably 2-5 bar.

After the copolymerization, the product is preferably recovered as a gel containing the copolymer, the solvent and/or unreacted monomer. The gel may then be added as such to the hydrocarbon fluid, the drag of which is to be reduced. Advantageously, the gel contains 4-10% by weight of the polymer or the copolymer, 30-50% by weight of the monomer and 50-65% by weight of the solvent. Alternatively, the monomer may be removed and recovered for reuse.

The gel may also be transformed into a drag reducing powder, slurry, solution or dispersion, which is then added to the conduit or fluid to be transported.

In addition to the above described process for preparing a drag reducing agent, the invention also relates to a method for reducing the drag of hydrocarbon flowing.

In the claimed drag reducing method, (a) a drag reducing agent prepared of the above described type is provided, and (b) the drag reducing composition is fed into a conduit or the like, in which the hydrocarbon is or will be flowing, or, alternatively to a fluid to be transported in the conduit or the like. Preferably, the drag reducing composition is fed in an amount of 1-200 ppm, preferably 10-100 ppm, most preferably 20-80 ppm, based on the amount of the flowing hydrocarbon.

The following examples, in which the parts and percentages are on a weight basis, unless otherwise indicated, are mecrely provided to illustrate the invention.

## Examples

## Measuring methods

The methods used for characterizing the drag reducing agents (compositions), henceforth called DRA, can crudely be subdivided into the physical properties (dry matter, viscosity) and the actual performance properties (DPT, Visko 50).

The dry matter of a gel sample is determined by removing the gel solvent(s) by evaporating in a heating chamber. In addition to the polymer, the gel hardly contains other solids, so, the dry matter gives the polymer content of the product. The dry matter of the gel is a remarkable physical property in so far as the performance reached at the site of use depends on the amount of polymer dissolved in the fluid, i.e. when feeding to the fluid equal masses or volumes of different products, most effective agent is fed with the product having the larges dry matter.

The viscosity is the dynamic viscosity (cP) was measured by a Brookfield viscometer using different shear rates (e.g. 0.5, 1, 2.5, 5, 10, 20, 50 and 100 rpm).

The DPT (= delta pressure vs. time) is a kind of life span analysis. The sample to be tested is fed to a solvent circulation system maintained by a gear pump. By measuring the productivity pressure, the dissolution of the sample can be followed and thereafter the gradual disappearance of the drag reducing effect can be followed as the sample one time after another passes the pump. In DPT measurements, attention is especially paid to the percent DPT, which is obtained as an integral by summing up the differences between the reference pressure and the momentary pressures during the measurement. The drag reduction can be calculated using the following equation:

$$\% \text{ drag reduction} = (p_0 - p_s)/p_0 \times 100$$

wherein $p_0$ is the measured drop occurring when hexane without drag reducing agent was pumped through the test line, and $p_s$ is the measured pressure drop occurring when hexane containing the drag reducing agent was pumped through the test line.

The Visko 50 test is based on measuring the kinematic viscosity of the sample.

A 50 ppm solution of the DRA is prepared, the viscosity of which is compared to the viscosity of pure solvent. The result of a Visko 50 test contains information about the solubility of the DRA as well as its ability to alter the viscoelastic properties of the hydrocarbon fluid. The DRA is considered the better, the larger the Visko 50 value is.

**Preparation**

**1. General**

The process is based on batch polymerization of a mixture of $C_6$, $C_8$ and $C_{12}$ linear alpha olefins using a saturated hydrocarbon as solvent and Ziegler-Natta catalyst as a polymerization catalyst system. The used catalyst system has been prepared by reacting and heating $TiCl_4$ and $C_2H_5OH$ to produce a molten complex and spray crystallizing the complex (see below). The polymerization process is a rapid one, partly because only about 15% of monomers will polymerize. When the proper molecular weight has been obtained, the polymerization product is pumped out of the reactor injecting simultaneously acetone to it for "killing" the catalyst. A monomer recovery process may eventually be included in the unit to improve the production economics.

**2. Catalyst preparation**

The catalyst was prepared essentially as follows:
102 kg of spray-chrystallized solid complex $MgCl_2 \cdot nC_2H_5OH$ wherein n = 2-4, containing 438 mol of Mg, was mixed in a reactor under inert conditions with 600 l of hydrocarbon medium (LIAV 110, Neste Oy) having a boiling point of 110°C. The obtained slurry was cooled to -15°C. Then, 1200 l of cold $TiCl_4$ was added and the temperature was allowed to rise gradually to 20°C. Next, 24.8 kg (63.6 mol) of dioctyl phthalate (DOP) was charged to the reactor. The temperature was elevated to 130°C for transesterification between the $C_2H_5OH$ and the DOP, and the solution was removed from the reactor after half an hour. Next, 1200 l of fresh $TiCl_4$ was charged to the reactor for a second titanation. Subsequently, the mixture was thermostated at 120°C. After one hour, the solid catalyst was washed three times with hot hydrocarbon (LIAV 1110) and dried under nitrogen at 50-60°C. The analyzed composition was Ti 2.0 wt-%, Mg 15.2 wt-%, DOP 0.1 wt-%, DEP 14.3 % and Cl 50.3 wt-%.

**3. Raw material supply and specifications**

The monomers $C_6$, $C_8$ and $C_{12}$ alpha olefins as well as 1,9-decadiene can be purchased as ready made blends or as such. They have the following specifications:

| Monomer | 1-hexene | 1-octene | 1-dodecene | 1,9-decadiene |
|---|---|---|---|---|
| Average molecular weight | 84 | 112 | 168 | 138 |
| Density at 20 °C, kg/l | 0.673 | 0.715 | 0.758 | 0.750 |
| Purity, alpha olefin content, wt-% | 98.5 | 98.5 | >96 | >95 |

A non-aromatic hydrocarbon solvent distillate is the solvent used in the production of the DRA gel.

| Distillation, °C | Specification | Typical Value |
|---|---|---|
| IBP | min 200 | 200-205 |
| 95 % | reported | 239-241 |
| FBP | max 250 | 246-250 |
| Dry point | reported | 244-249 |
| Density, 15 °C | reported | 800-810 |

A Ziegler-Natta catalyst is used for the polymerization. Its specifications are:

| | |
|---|---|
| Magnesium chloride, wt-% | 40-60 |
| $TiCl_4$, wt-% | 5-16 |
| Hydrocarbon distillate, wt-% | 10-25 |
| Dialkyl esters of 1,2-benzene dicarboxylic acid, wt-% | 5-15 |

### 4. Cocatalyst

Aluminium alkyl is used as a cocatalyst with Ziegler catalyst. The DRA polymerization uses TIBA (triisobutyl aluminium) as a 25 wt-% solution in heptane as a cocatalyst. The cocatalyst has the following specifications:

| Chemical Name | Triisobutylaluminium |
|---|---|
| Abbreviation | TIBA |
| Concentration, wt-% in heptane | 25 |
| Density, kg/l | 0.7248 |

### 5. External donor

The external donor is cyclohexyl methyl dimetoxy silane. The donor is diluted with a solvent (bp. 250 °C) for a 15 wt-% solution.

### 6. Quencher

Any catalyst deactivating compound, e.g. acetone, can be used for stopping the polymerization reaction. The quencher is mixed with the polymerized product when the polymerized DRA product is transferred from the reactor to the storage tank.

### 7. Polymerization

The polymerization of $C_6$, $C_8$ and $C_{12}$ monomer blend is performed in said saturated hydrocarbon solvent with said Ziegler-Natta catalyst in a series of two batch reactors. Chilled monomer blend, solvent, initiator and catalyst are charged into the first prepolymerization reactor with an agitator running in order to obtain a homogeneous mixture at all times. The initial temperature is -5 °C to -10 °C. The first 15 most crucial minutes of the polymerization process take place in the prepolymerization reactor. After these initial 15 minutes of the polymerization process when the temperature has risen to about 0 °C, the contents of a batch are still quite easily flowing and the batch is then transferred to the actual polymerization reactor where the final part of the polymerization takes place in an hour during which the temperature rises to about +10 °C to +15 °C. The amounts of monomer are adjusted to obtain the following product composition.

### 8. Product specifications

The obtained product, DRA gel, is a mixture of monomers, solvent and 7 wt-% of polymer with the following properties:

| Composition, wt-% | |
|---|---|
| - polymer | 5-7 |
| - monomer | 40-42 |
| - solvent | 52-54 |
| - acetone | 0.08 |
| Average molecular weight | > 5 000 000 (typical) |
| Viscosity (Brookfield 7/20) at 20 °C, cP | > 20 000 |

The amounts of used reactants and the analytical results of the examples are given in the following table.

Table

| The results of the reference and working examples | | | | | | | | |
|---|---|---|---|---|---|---|---|---|
| | **Bench scale** | | **Pilot scale** | | | | | |
| **Formulation** | **Ex. 1** | **Ex.2** | **Ex.3** | **Ex.4** | **Ex. 5** | **Ex. 6** | **Ex.7** | **Ex. 8** |
| Solvent | 1400 ml | 1400 ml | 1750 kg | 1750 kg | 0 | 0 | 1500 kg | 1750 kg |

Table   (continued)

| The results of the reference and working examples | | | | | | | | |
|---|---|---|---|---|---|---|---|---|
| | **Bench scale** | | **Pilot scale** | | | | | |
| **Formulation** | **Ex. 1** | **Ex.2** | **Ex.3** | **Ex.4** | **Ex. 5** | **Ex. 6** | **Ex.7** | **Ex. 8** |
| C6 | 700 ml | 700 ml | 875kg | 875kg | 650 kg | 650 kg | 750kg | 875 kg |
| C8 | 350 ml | 350 ml | 437.5 kg | 437.5 kg | 0 | 0 | 375 kg | 438 kg |
| C12 | 350 ml | 350 ml | 437.5kg | 437.5 kg | 0 | 0 | 375kg | 438 kg |
| Catalyst | 0.3 g | 0.36 g | 340 ml | 460 ml | 125 ml | 125 ml | 195 ml | 380 ml |
| TIBA | 10.4 ml | 10.4 ml | 7110 ml | 7200 ml | 1263 ml | 1263 ml | 4331 ml | 7146 ml |
| Donor | 0.4 ml | 0.4 ml | 1065 ml | 1150 ml | 188 ml | 188 ml | 427 ml | 1100 ml |
| 1.9-decadiene | 0 | 0.84 g | 0 | 2000 ml | 0 | 560 ml | 0 | 2000 ml |
| Analysis | | | | | | | | |
| Visko 50 | 0.227 | 0.263 | 0.175 | 0.17 | 0.229 | 0.307 | 0.182 | 0.199 |
| DPT % | 5.69 | 9.03 | 7.8 | 9.7 | 9.3 | 10.1 | 6 | 9.1 |
| Dry matter | 4.1 | 4.7 | 6.9 | 6.8 | 9.9 | 6.5 | 6.6 | 7.8 |

**Claims**

1. A process for the production of a drag reducing agent, wherein a monomer mixture comprising one or more $C_4$-$C_{30}$ monoolefins, preferably $C_6$-$C_{20}$ monoolefins, is polymerized into an essentially non-crystalline, hydrocarbon-soluble, ultrahigh molecular weight drag reducing polymer in the presence of a polymerization catalyst system comprising a Group 4-6 (IUPAC 1990) transition metal compound and an organoaluminium compound, wherein said transition metal compound has been prepared by providing a support comprising an atomized complex of a magnesium halide and a monohydric $C_1$-$C_4$ alcohol and contacting the support with a halogenous titanium compound and a $C_6$-$C_{18}$ alkyl carboxylic acid ester under conditions which deposit the halogenous titanium compound on the support and cause transesterification between the monohydric $C_1$-$C_4$ alcohol and the $C_6$-$C_{18}$ alkyl carboxylic acid ester, **characterized in that**, in order to improve the high shear force resistance of the drag reducing agent, the monomer mixture contains 0.0001-10%, preferably 0.001-1%, most preferably 0.01-0.1%, based on of the weight of the $C_4$-$C_{30}$ monoolefin(s), preferably $C_6$-$C_{20}$ monoolefin(s), of a polyunsaturated aliphatic hydrocarbon, which is copolymerized with the said monoolefin(s).

2. A process according to claim 1, **characterized in that** the polyunsaturated aliphatic hydrocarbon is a $C_4$-$C_{30}$ diene, preferably a non-conjugated $C_6$-$C_{20}$ diene, such as hexadiene, octadiene, decadiene, dodecadiene, tetradecadiene including any of their isomers such as hexa-1,4-diene, octa-1,4-diene, octa-1,7-diene, deca-1,7-diene, deca-1,9-diene, dodeca-1,11-diene, tetradeca-1,13-diene or hexadeca-1,15-diene, or a mixture thereof.

3. A process according to claim 1 or 2, **characterized in that** after the copolymerization, the product is recovered as a gel containing the copolymer, the solvent and/or unreacted monomer, preferably 4-10% by weight of the copolymer, 30-50% by weight of the monomer and 50-65% by weight of the solvent.

4. A process according to claim 1, 2 or 3, **characterized in that** the support has been prepared by contacting and heating magnesium chloride and ethanol to form a molten complex $MgCl_2 \cdot n\ C_2H_5OH$, wherein n is 2-6, and atomizing and solidifying the molten complex, preferably by spraying into cooled gas (spray-crystallizing).

5. A process according to any one of the preceding claims, **characterized in that** the support has been contacted with the halogenous titanium compound and the $C_6$-$C_{18}$-alkyl carboxylic acid ester by preparing a hydrocarbon slurry of the support, adding titanium tetrachloride and a $C_6$-$C_{18}$ alkyl phthalate to the slurry, preferably at a temperature below + 120°C, and heating the resulting mixture to an elevated temperature, preferably over +120°C.

6. A process according to any one of the preceding claims, **characterized in that** the organoaluminium compound is a compound of the composition:

$$R_mAl_nX_{3n-m}$$

wherein R is a $C_1$-$C_8$-alkyl, X is a halogen, m > 1 and n = 1 or 2, preferably triethyl aluminium or triisobutyl aluminium.

7. A process according to any one of the preceding claims, **characterized in that** the polymerization catalyst system comprises a di-$C_1$-$C_{12}$ alkyl-di- $C_1$-$C_6$ alkoxy silane.

8. A process according to any one of the preceding claims, **characterized in that** the $C_4$-$C_{30}$ monoolefin is selected from $C_6$-$C_{12}$ alkene-1 compounds.

9. A process according to any one of the preceding claims, **characterized in that** the monomer or monomer mixture is polymerized into an essentially non-crystalline, hydrocarbon-soluble, ultrahigh molecular weight drag reducing polymer by carrying out the polymerization essentially in the absence of chain transfer agents, such as hydrogen, and/or stopping the reaction at a low conversion such as 10-30 mol-%, preferably 10-20 mol-%.

10. A method for reducing the drag of hydrocarbon flowing, **characterized by**

(a) providing a drag reducing agent prepared according to any of claims 1-9,

(b) feeding the drag reducing composition onto a conduit or the like in which the hydrocarbon is or will be flowing.

11. A method according to claim 10, **characterized in that** the drag reducing composition is fed in an amount of 1-200 ppm, preferably 10-100 ppm, most preferably 20-80 ppm, based on the amount of the flowing hydrocarbon.


**Patentansprüche**

1. Verfahren zur Herstellung eines Mittels zur Reduzierung des Strömungswiderstands, wobei eine Monomer Mischung, die ein oder mehrere $C_4$-$C_{30}$ Monoolefine, bevorzugt $C_6$-$C_{20}$ Monoolefine, umfasst, polymerisiert wird in ein im Wesentlichen nicht kristallines, in Kohlenwasserstoff lösliches, ultrahoch molekulargewichtiges Polymer zur Reduzierung des Strömungswiderstands in Gegenwart eines Polymerisation-Katalysatorsystems, das eine Übergangsmetall-Verbindung der Gruppe.4-6 (IUPAC 1990) und eine Organoaluminium-Verbindung umfasst, wobei die Übergangsmetall-Verbindung durch Bereitstellen eines Trägers, der einen zerstäubten Komplex aus Magnesium-Halogenid und einem monohydrischen $C_1$-$C_4$ Alkohol aufweist, und durch Inkontaktbringen des Trägers mit einer halogenhaltigen Titanverbindung und mit einem $C_6$-$C_{18}$ Alkylcarboxylsäureester unter Bedingungen hergestellt wurde, bei welchen sich die halogenhaltige Titanverbindung auf dem Träger abscheidet, und die zu einer Umesterung zwischen dem monohydrischen $C_1$-$C_4$ Alkohol und dem $C_6$-$C_{18}$ Alkylcarboxylsäureester führt, **dadurch gekennzeichnet, dass** zur Verbesserung des hohen Scherkraft-Widerstandes des Mittels zur Reduzierung des Strömungswiderstands die Monomer-Mischung 0,0001-10%, bevorzugt 0,001-10%, weiter bevorzugt 0,01-10%, basierend auf dem Gewicht der/des $C_4$-$C_{30}$ Monoolefine/s, bevorzugt der/des $C_6$-$C_{20}$ Monoolefine/s, eines mehrfach ungesättigten aliphatischen Kohlenwasserstoffs umfasst, der mit dem/den Monoolefin(en) copolymerisiert wird.

2. verfahren nach Anspruch 1, **dadurch gekennzeichnet, dass** der mehrfach ungesättigte aliphatische Kohlenwasserstoff ein $C_4$-$C_{30}$ Dien ist, bevorzugt ein nichtkonjugiertes $C_6$-$C_{20}$ Dien, wie Hexadien, Octadien, Decadien, Dodecadien, Tetradecadien einschließlich jedes seiner Isomere, wie Hexa-1,4-Dien, Octa-1,4-Dien, Deca-1,7-Dien, Deca-1,9-Dien, Dodeca-1,11-Dien, Tetradeca-1,13-Dien oder Hexadeca-1,15-Dien oder eine Mischung davon.

3. Verfahren nach Anspruch 1 oder 2, **dadurch gekennzeichnet, dass** nach der Copolymerisation das Produkt als ein Gel, das das Copolymer, das Lösungsmittel und/oder unreagiertes Monomer umfasst, bevorzugt 4-10 Gewichts-% Copolymer, 30-50 Gewichts-% Monomer und 50-65 Gewichts-% Lösungsmittel, gewonnen wird.

4. Verfahren nach Anspruch 1, 2 oder 3, **dadurch gekennzeichnet, dass** der Träger durch Inkontaktbringen und Erhitzen von Magnesiumchlorid und Ethanol zur Bildung eines geschmolzenen Komplexes $MgCl_2 \cdot n \cdot C_2H_5OH$, wo-

bei n = 2-6 ist, und durch Zerstäuben und Verfestigen des geschmolzenen Komplexes, bevorzugt durch Sprühen in gekühltes Gas (Sprüh-Kristallisation) hergestellt wurde.

**5.** Verfahren nach einem der vorhergehenden Ansprüche, **dadurch gekennzeichnet, dass** der Träger in Kontakt gebracht wurde mit der halogenhaltigen Titanverbindung und mit dem $C_6$-$C_{18}$ Alkylcarboxylsäureester durch Herstellung einer Kohlenwasserstoff-Aufschlämmung des Trägers, durch Zusatz von Titantetrachlorid und einem $C_6$-$C_{18}$ Alkylphthalat zu der Aufschlämmung, bevorzugt bei einer Temperatur unter 120°C, und durch Erhitzen der resultierenden Mischung auf eine erhöhte Temperatur, bevorzugt über 120°C.

**6.** Verfahren nach einem der vorhergehenden Ansprüche, **dadurch gekennzeichnet, dass** die Organoaluminium-Verbindung eine Verbindung der Formel

$$R_m Al_n X_{3n-m}$$

ist, worin R ein $C_1$-$C_8$-Alkyl, X ein Halogen, m > und n = 1 oder 2 ist, bevorzugt Triethylaluminium oder Triisobutylaluminium.

**7.** Verfahren nach einem der vorhergehenden Ansprüche, **dadurch gekennzeichnet, dass** das Polymerisation-Katalysatorsystem ein Di-$C_1$-$C_{12}$ Alkyl-Di-$C_1$-$C_6$ Alkoxysilan umfasst.

**8.** Verfahren nach einem der vorhergehenden Ansprüche, **dadurch gekennzeichnet, dass** das $C_4$-$C_{30}$ Monoolefin aus $C_6$-$C_{20}$ Alken-1 Verbindungen ausgewählt wurde.

**9.** Verfahren nach einem der vorhergehenden Ansprüche, **dadurch gekennzeichnet, dass** das Monomer oder die Monomer-Mischung in ein im Wesentlichen nicht kristallines, in Kohlenwasserstoff lösliches, ultrahoch molekulargewichtiges Polymer zur Reduzierung des Strömungswiderstands polymerisiert wird, und zwar durch Ausführen der Polymerisation im Wesentlichen in Abwesenheit von Kettenübertragungsmitteln, wie Wasserstoff, und/oder durch Stoppen der Reaktion bei einer geringen Umsetzung wie 10-30 mol-%, bevorzugt 10-20 mol-%.

**10.** Verfahren zur Reduzierung des Strömungswiderstands des Kohlenwasserstoff-Flusses, **gekennzeichnet durch**

(a) Bereitstellen eines Mittels zur Reduzierung des Strömungswiderstands, welcher nach einem der Ansprüche 1-9 hergestellt wird,
(b) Zuführen der Komposition zur Reduzierung des Strömungswiderstands in eine Leitung oder dergleichen, in der der Kohlenwasserstoff ist oder fließen wird.

**11.** Verfahren nach Anspruch 10, **dadurch gekennzeichnet, dass** die Komposition zur Reduzierung des Strömungswiderstands in Mengen von 1-200 ppm, bevorzugt 10-100 ppm, meist bevorzugt 20 bis 80 ppm, basierend auf der Menge an fließendem Kohlenwasserstoff, zugeführt wird.

**Revendications**

**1.** Procédé de production d'un agent de réduction de la résistance de frottement, dans lequel un mélange de monomères comprenant une ou plusieurs monooléfines en $C_4$-$C_{30}$, de préférence des monooléfines en $C_6$-$C_{20}$, est polymérisé en un polymère de réduction de la résistance de frottement essentiellement non-cristallin, soluble dans des hydrocarbures et à poids moléculaire ultra-élève, en présence d'un système catalyseur de polymérisation comprenant un composé d'un métal de transition des groupes 4 à 6 (IUPAC 1990) et un composé organoaluminium, dans lequel ledit composé d'un métal de transition a été préparé en fournissant un support comprenant un complexe atomisé d'un halogénure de magnésium et un alcool monohydrique en $C_1$-$C_4$ et en mettant en contact le support avec un composé de titane halogéné et un ester d'alkyle d'acide carboxylique en $C_6$-$C_{18}$ dans des conditions qui entraînent le dépôt du composé de titane halogéné sur le support et entraînent la transesterification entre l'alcool monohydrique en $C_1$-$C_4$ et le carboxylate d'alkyle en $C_6$-$C_{18}$, **caractérisé en ce que**, afin d'améliorer la résistance au cisaillement élevée de l'agent de réduction de la résistance de frottement, le mélange de monomères comprend de 0,0001% à 10%, de préférence de 0,001% à 1%, de manière préférée entre toutes de 0,01% à 0,1%, rapporté au poids de la (des) monooléfine(s) en $C_4$-$C_{30}$, de préférence de la (des) monooléfine(s) en $C_6$-$C_{20}$, d'un hydrocarbure aliphatique polyinsaturé, qui est copolymérisé avec la(les)dite(s) monooléfine(s).

**2.** Procédé selon la revendication 1, **caractérisé en ce que** l'hydrocarbure aliphatique polyinsaturé est un diène en $C_4$-$C_{30}$, de préférence un diène non conjugué en $C_6$-$C_{20}$, par exemple, un hexadiène, un octadiène, un décadiéne, un dodécadiène, un tétradécadiéne, y compris les isomères de ceux-ci, par exemple, l'hexa-1,4-diène, l'octa-1,4-diène, l'octa-1,7-diène, le déca-1,7-diène, le déca-1,9-diène, le dodéca-1,11-diène, le tétradéca-1,13-diène ou l'hexadéca-1,15-diène ou un mélange de ceux-ci.

**3.** Procédé selon la revendication 1 ou la revendication 2, **caractérisé en ce qu'**après la copolymérisation, le produit est récupéré sous la forme d'un gel contenant le copolymère, le solvant et/ou le monomère n'ayant pas réagi, de préférence de 4 à 10% en poids du copolymère, de 30 à 50% en poids du monomère et de 50 à 65% en poids du solvant.

**4.** Procédé selon la revendication 1, 2 ou 3, **caractérisé en ce que** le support a été préparé en mettant en contact et en chauffant le chlorure de magnésium et l'éthanol pour former un complexe fondu $MgCl_2 \cdot n\ C_2H_5OH$, dans lequel n est de 2 à 6 et en atomisant et en solidifiant le complexe fondu, de préférence par pulvérisation dans un gaz refroidi (cristallisation par pulvérisation).

**5.** Procédé selon l'une quelconque des revendications précédentes, **caractérisé en ce que** le support a été mis en contact avec le composé de titane halogéné et carboxylate d'alkyle en $C_6$-$C_{18}$ en préparant une suspension du support dans un hydrocarbure, en ajoutant le tétrachlorure de titane et un phtalate d'alkyle en $C_6$-$C_{18}$, de préférence à une température inférieure à +120°C et en chauffant le mélange résultant à une température élevée, de préférence supérieure à +120°C.

**6.** Procédé selon l'une quelconque des revendications précédentes, **caractérisé en ce que** le composé organoaluminium est un composé ayant la composition :

$$R_mAl_nX_{3n-m}$$

dans laquelle R est un groupe alkyle en $C_1$-$C_8$, X est un halogène, m>1 et n=1 ou 2, de préférence le triéthylaluminium ou le triisobutylaluminium.

**7.** Procédé selon l'une quelconque des revendications précédentes, **caractérisé en ce que** le système catalyseur de polymérisation comprend un di-($C_1$-$C_{12}$ alkyl)-di-($C_1$-$C_6$ alkoxy)-silane.

**8.** Procédé selon l'une quelconque des revendications précédentes, **caractérisé en ce que** la monooléfine en $C_4$-$C_{30}$ est choisie parmi les alcènes-1 en $C_6$-$C_{12}$.

**9.** Procédé selon l'une quelconque des revendications précédentes, **caractérisé en ce que** le monomère ou le mélange de monomères est polymérisé en un polymère de réduction de la résistance de frottement essentiellement non cristallin, soluble dans les hydrocarbures, à poids moléculaire ultra-élevé en réalisant la polymérisation essentiellement en l'absence d'agent de transfert de chaîne, tel que l'hydrogène, et/ou en interrompant la réaction à une conversion faible par exemple de 10 à 30% en mole, de préférence de 10 à 20% en mole.

**10.** Procédé de réduction de la résistance de frottement de l'écoulement d'hydrocarbures, **caractérisé en ce qu'**il comprend les étapes consistant à :

(a) fournir un agent de réduction de la résistance de frottement préparé selon l'une quelconque des revendications 1 à 9 ;
(b) introduire la composition de réduction de la résistance de frottement dans un tuyau ou tout autre dispositif similaire dans lequel l'hydrocarbure s'écoule ou va s'écouler.

**11.** Procédé selon la revendication 10, **caractérisé en ce que** la composition de réduction de la résistance de frottement est introduite en une quantité de 1 à 200 ppm, de préférence de 10 à 100 ppm, de manière préférée entre toutes de 20 à 80 ppm, sur base de la quantité de l'hydrocarbure s'écoulant.